# EUROPÄISCHE PATENTANMELDUNG

(11) **EP 1 037 451 A2**
(43) Veröffentlichungstag der Anmeldung: **20.09.2000**
(21) Anmeldenummer: 00105504.5
(22) Anmeldetag: 15.03.2000
(51) Int. Cl.: H04M 3/42

(54) **Telekommunikationsanlage und Verfahren zum Versenden von Fax, SMS oder E-mail**

(30) Priorität: 16.03.1999 DE 19911693
(71) Anmelder: SIEMENS AKTIENGESELLSCHAFT, 80333 München (DE)
(72) Erfinder: Neuhaus, Ralf, 44534 Lünen (DE); Henniger, Andreas, 45239 Essen (DE); Sablewski, Uwe, 33335 Gütersloh (DE); Ide, Hans-Dieter, Dr., 44287 Dortmund (DE); Geck, Bertram, 58239 Schwerte (DE)

(57) **Zusammenfassung**

Die Erfindung betrifft eine Telekommunikationsanlage mit einem Anschluß an ein externes Telekommunikationsnetz und mehreren mittelbar oder unmittelbar untereinander verbundenen, internen Telekommunikationsendgeräten, die zumindest teilweise über eine einzeilige oder mehrzeilige Anzeigevorrichtung zumindest für geschriebenen Text und einer Eingabevorrichtung zumindest für geschriebenen Text verfügen, einer Einwahlvorrichtung in das externe Telekommunikationsnetz und einer Recheneinheit mit einem Datenspeicher.

Die erfindungsgemäße Telekommunikationsanlage ist dadurch gekennzeichnet, daß an mindestens einem Telekommunikationsendgerät (2.1 - 2.3) Mittel zur Auswahl einer Sendeart einer zuvor eingegebenen oder vorhandenen Zeichenfolge vorgesehen sind.

Weiterhin betrifft die Erfindung ein Verfahren zum Betrieb der erfindungsgemäßen Telekommunikationsanlage.

Das Verfahren zeichnet sich dadurch aus, daß an mindestens einem Telekommunikationsendgerät (2.1 - 2.3) die Sendeart einer zuvor eingegebenen oder vorhandenen Zeichenfolge ausgewählt werden kann.

## Beschreibung

Die Erfindung betrifft eine Telekommunikationsanlage mit einem Anschluß an ein externes Telekommunikationsnetz und mehreren mittelbar oder unmittelbar untereinander verbundenen, internen Telekommunikationsendgeräten, die zumindest teilweise über eine einzeilige oder mehrzeilige Anzeigevorrichtung zumindest für geschriebenen Text und einer Eingabevorrichtung zumindest für geschriebenen Text verfügen, einer Einwahlvorrichtung in das externe Telekommunikationsnetz und einer Recheneinheit mit einen Datenspeicher. Weiterhin betrifft die Erfindung ein entsprechendes Verfahren zum Betrieb der erfindungsgemäßen Telekommunikationsanlage.

Eine ähnliche Telekommunikationsanlage und ein ähnliches Verfahren zum Betrieb von Telekommunikationsanlagen sind beispielhaft aus den Anmeldungen der Anmelderin mit den Aktenzeichen DE 196 29 055 und EP 06 22 968 bekannt. Beide Anmeldungen offenbaren eine Telekommunikationsanlage mit einen Anschluß an ein externes Telekommunikationsnetz und untereinander verbundene, interne Telekommunikationsendgeräte sowie eine Einwahlvorrichtung in das externe Telekommunikationsnetz mit einer Recheneinheit, die Datenspeicher aufweist. Weiterhin ist aus der EP 05 89 248 bekannt, daß die internen Telekommunikationsendgeräte einer Telekommunikationsanlage mit Eingabevorrichtungen (Tastatur) und Anzeigevorrichtungen ( 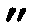 Displays") ausgestattet sind.

Ein Nachteil dieser bekannten Telekommunikationsanlagen liegt darin, daß das Benutzungsspektrum dieser Anlagen im wesentlichen auf die Sprachkommunikation innerhalb der Telekommunikationsanlage beziehungsweise innerhalb des Telekommunikationsnetzes beschränkt ist. Möchte man an andern Telekommunikationsdiensten und beispielsweise eine E-mail oder ein Fax oder eine SMS (SMS=Short Message Service) versenden, so benötigt man jeweils eine separate Vorrichtung, entweder in Form eines Faxgerätes oder eines an die Telekommunikationsanlage angeschlossenen Personal Computers.

Es ist Aufgabe der Erfindung eine Telekommunikationsanlage zu beschreiben, welche in der Lage ist, an der Telekommunikationsanlage selbst verfaßte Nachrichten ohne Inanspruchnahme eines weiteren separaten Vorrichtung zu versenden. Ebenfalls soll ein entsprechendes Verfahren zum Betrieb der Telekommunikationsanlage angegeben werden.

Die Erfinder haben erkannt, daß es möglich ist, mit den an sich bekannten Telekommunikationsanlagen auch ohne die Zwischenschaltung von Datenverarbeitungsgeräten - wie Personal-Computer oder Workstation - auf die heute zur Verfügung stehenden Messaging-Dienste zugreifen zu können. Hierzu ist es notwendig die bekannten Telekommunikationssysteme dahingehend zu erweitern, daß entweder die Telekommunikationsanlage selbst die spezifischen Messaging-Protokolle für ihre Anzeige verwendet, oder daß die spezifischen Messaging-Protokolle auf die telekommunikationsanlagenspezifischen Protokolle beziehungsweise Zeichenfolgen umgesetzt werden.

Weiterhin muß im Telekommunikationssystem eine Möglichkeit zur Verfügung gestellt werden, die es dem Teilnehmer erlaubt zu definieren, in welcher Sendeart (zum Beispiel E-mail, Fax oder SMS) er eine Nachricht, die er auf seinem Telekommunikationsendgerät, also einem anlagenspezifischen Telefon, erstellt hat, versenden möchte.

Eine Verbesserung besteht darin, daß nicht nur das Versenden von Nachrichten an die spezifischen Dienste, wie E-mail, Fax oder SMS möglich ist, sondern daß auch der umgekehrte Weg begangen wird und die Telekommunikationsanlage E-mails, Faxe und SMS direkt empfangen und an den entsprechenden Teilnehmer weitergeleitet werden. Die Voraussetzung hierfür ist, daß die Telekommunikationsanlage fähig ist, die entsprechend einkommenden Nachrichten auf das anlagespezifische Anzeigeformat am Display eines Telekommunikationsendgerätes (zum Beispiel einem Telefonapparat mit einem entsprechenden Display) anzuzeigen.

Entsprechend dem Hauptgedanken der Erfindung, schlägt der Erfinder zur Lösung der Aufgabe vor, eine Telekommunikationsanlage mit mindestens einem Anschluß an mindestens ein externes Telekommunikationsnetz und mehreren mittelbar oder unmittelbar untereinander verbundenen, internen Telekommunikationsendgeräten, die zumindest teilweise über eine einzeilige oder mehrzeilige Anzeigevorrichtung zumindest für geschriebenen Text und einer Eingabevorrichtung zumindest für geschriebenen Text verfügen, einer Einwahlvorrichtung in das mindestens eine externe Telekommunikationsnetz und mindestens einer Recheneinheit mit mindestens einem Datenspeicher, dahingehend weiterzuentwickeln, daß an mindestens einem Telekommunikationsendgerät Mittel zur Auswahl einer Sendeart einer zuvor eingegebenen oder vorhandenen Zeichenfolge vorgesehen sind. Es muß also dem Benutzer des Telekommunikationsendgerätes eine Möglichkeit geschaffen werden, zu bestimmen mit welcher Sendeart, das heißt also per Fax, E-mail oder SMS, er eine bestimmte Nachricht, die er zuvor eingegeben hat oder die er beispielsweise über eine andere E-mail erhalten hat, an einen bestimmten Adressaten weiterleiten möchte. Wird die Nachricht, die in der Regel als Zeichenfolge vorliegen wird, als E-mail versandt, so muß die in der Anlage vorliegende Nachricht mit einem entsprechenden 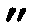 Header" versehen werden und dann an einen zuvor bestimmten E-mail-Server über das normale Telekommunikationsnetz, das beispielsweise ein ISDN-Netz sein kann, weitergegeben werden.

Wird die Nachricht als Zeichenfolge (zum Beispiel ASCII-Zeichenfolge) an einen Fax-Server weitergegeben, so setzt der Fax-Server die Nachricht entsprechend in ein Pixelbild um, das dann bei dem zuvor angegebenen Adressaten im Fax als Pixel-Ausgabe erscheint.

Erfindungsgemäß besteht allerdings auch die Möglichkeit, daß die Telekommunikationsanlage selbst die als Zeichenfolge bestehende Nachricht in eine Pixel-Form, entsprechend dem Fax-Standard, umwandelt und direkt an ein entsprechendes Fax-Gerät ausgibt.

Entsprechend diesem Gedanken ist es vorteilhaft, in der Telekommunikationsanlage Mittel vorzusehen, die vor dem Versenden der Zeichenfolge eine Konvertierung der telekommunikationsanlagenspezifischen Zeichenfolge in eine sendeartspezifische Zeichenfolge eines entsprechenden Dienstes durchführen.

Außerdem ist es nach einer erfindungsgemäßen Ausgestaltung der Telekommunikationsanlage auch vorteilhaft, wenn zumindest eine der möglichen Sendeart einer E-mail-Versendung und/oder einer Fax-Versendung und/oder einer SMS-Versendung (SMS = Short Message Service) entspricht.

Vorteilhaft ist es weiterhin, wenn die Versendung der Zeichenfolge zum entsprechenden Dienste-Server einem SMTP (Simple Mail Tranfer Protocol, RFC 821) entspricht. Dieses Protokoll stellt den heutigen Standard für die Kommunikation mit den Dienste-Servern der bekannten Messaging-Dienste dar.

Eine weitere vorteilhafte Ausführung der Telekommunikationsanlage sieht vor, daß als Mittel zur Auswahl einer Sendeart eine Menüauswahl am Display des Telekommunikationsendgerätes eingeblendet wird. Allerdings besteht auch die Möglichkeit bestimmte programmierbare oder festgelegte Tasten am Telekommunikationsendgerät vorzusehen mit deren Hilfe eine Auswahl der Sendeart ermöglicht wird. Weiterhin kann es von Vorteil sein, wenn die Telekommunikationsanlage einen Datenspeicher mit einer Liste von Dienste-Servern und zugeordneten Rufnummern gegebenenfalls Kennungen und/oder Paßwörtern aufweist, die bei der Versendung der Nachricht entsprechend einer bestimmten Sendeart genutzt werden. Hierdurch können zentral bestimmte Vorgaben innerhalb eines Betriebes gesetzt werden, so daß zum Beispiel ausgehende E-mails nur über bestimmte Mail-Server abgewickelt werden. Dies erzeugt eine einfache Einflußmöglichkeit auf die Kostensituation, kann aber auch bezüglich sicherheitstechnischer Überlegungen von Vorteil sein.

Eine weitere vorteilhafte Ausführung der Telekommunikationsanlage sieht vor, daß an mindestens einem Telekommunikationsendgerät oder in der Zentraleinheit der Telekommunikationsanlage Mittel zum Empfang von E-mail und/oder Fax und/oder SMS-Nachrichten vorgesehen sind. Bezüglich der Ausführung dieser Mittel wird auf die gleichzeitig eingereichte Patentanmeldung der Anmelderin mit dem internen Aktenzeichen GR 98 E 5914 DE hingewiesen und deren Offenbarungsgehalt vollinhaltlich übernommen. Vorteilhaft bei dieser erfindungsgemäßen Ausführung der Telekommunikationsanlage ist es, wenn außerdem Mittel zur Konvertierung von Zeichenfolgen empfangener E-mail und/oder Fax und/oder SMS-Nachrichten auf die telekommunikationsanlagenspezifische Zeichenfolge vorgesehen sind.

Die oben angegebenen Mittel werden in modernen Telekommunikationsanlagen meist durch die Ausstattung von Microprozessoren mit Programmen verwirklicht, die nach den oben dargestellten Vorgaben geschrieben sind. Allerdings können einzelne oder alle Funktionen auch schaltungstechnisch verwirklicht werden.

Entsprechend dem Hauptgedanken der Erfindung wird außerdem vorgeschlagen, das an sich bekannte Verfahren zum Betrieb einer Telekommunikationsanlage mit Verbindungs- und Wählfunktionen, dahingehend weiterzuentwickeln, daß an mindestens einem Telekommunikationsendgerät die Sendeart einer zuvor eingegebenen oder vorhandenen Zeichenfolge ausgewählt werden kann.

In einer Weiterentwicklung des erfindungsgemäßen Verfahrens wird vorgeschlagen, vor dem Versenden der Zeichenfolge eine Konvertierung der telekommunikationsanlagenspezifischen Zeichenfolge in eine sendeartspezifische Zeichenfolge eines entsprechenden Dienstes der Sendeart durchzuführen. Als Sendeart kann beispielsweise eine E-mail-Versendung, eine Fax-Versendung oder eine SMS-Versendung (SMS = Short Message Service) von Nachrichten verwendet werden.

Für das Ansprechen der entsprechenden Dienste-Server wird vorgeschlagen, ein SMTP (Simple Mail Tranfer Protocol, RFC 821) zu verwenden.

Für eine einfache Handhabung und Bedienung ist es weiterhin vorteilhaft, wenn zur Auswahl einer Sendeart eine Menüauswahl am Telekommunikationsendgerät eingeblendet wird, so daß der Teilnehmer aus dem Menü die entsprechende Sendeart auswählen kann.

Vorteilhaft ist es außerdem, wenn vor der Anwahl der Dienste-Server eine Liste im Datenspeicher der Telekommunikationsanlage mit gespeicherten, den Dienste-Servern zugeordneten Rufnummern gegebenenfalls Kennungen und Paßwörtern durchsucht und zur Anwahl des Dienste-Servers zur ausgewählten Sendeart verwendet wird. Durch diese Art des Anwahlverfahrens wird der Teilnehmer selbst nicht mit der Eingabe des entsprechenden Dienste-Servers belastet, sondern legt lediglich die Sendeart fest.

Eine weitere Möglichkeit besteht darin, daß vor der Anwahl der Dienste-Server dem Teilnehmer selbst eine Liste mit gespeicherten, den Dienste-Servern zugeordneten Rufnummern gegebenenfalls Kennungen und/oder Paßwörtern zur Auswahl des gewünschten Dienste-Servers angezeigt wird, so daß der Teilnehmer die Auswahl trifft, mit welchem Dienste-Server gearbeitet wird.

Eine weitere Möglichkeit besteht auch darin, daß im gespeicherten Adressbuch in der Telekommunikationsanlage, welches entweder allen Teilnehmern oder nur einem spezifischen Teilnehmer zur Verfügung steht, ein Hinweis aufgenommen wird, welche Dienste-Server für den entsprechenden Adressaten verwenden werden können beziehungsweise bevorzugt verwendet werden sollen.

Entsprechend dem erfindungsgemäßen Verfahren wird auch zusätzlich zur Möglichkeit der Versendung von Textinformation der Empfang von Textinformationen über E-mail, Fax oder SMS vorgeschlagen, wobei eine Rekonvertierung der empfangenen Zeichenfolgen auf die telekommunikationsanlagenspezifische Zeichenfolge vorgenommen wird.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung der bevorzugten Ausführungsbeispiele unter Bezugnahme auf die Zeichnungen.

Es zeigen im einzelnen:
- Figur 1:: Schematische Übersicht der erfindungsgemäßen Telekommunikationsanlage in Verbindung mit den Dienste-Servern zur Versendung einer E-mail;
- Figur 2:: Schematische Übersicht der erfindungsgemäßen Telekommunikationsanlage in Verbindung mit den Dienste-Servern zur Versendung einer SMS;
- Figur 3:: Schematische Übersicht der erfindungsgemäßen Telekommunikationsanlage in Verbindung mit den Dienste-Servern zur Versendung eines Faxes;
- Figur 4:: SMTP-Meldungsablauf zwischen Telekommunikationsanlage und Mail-Server.

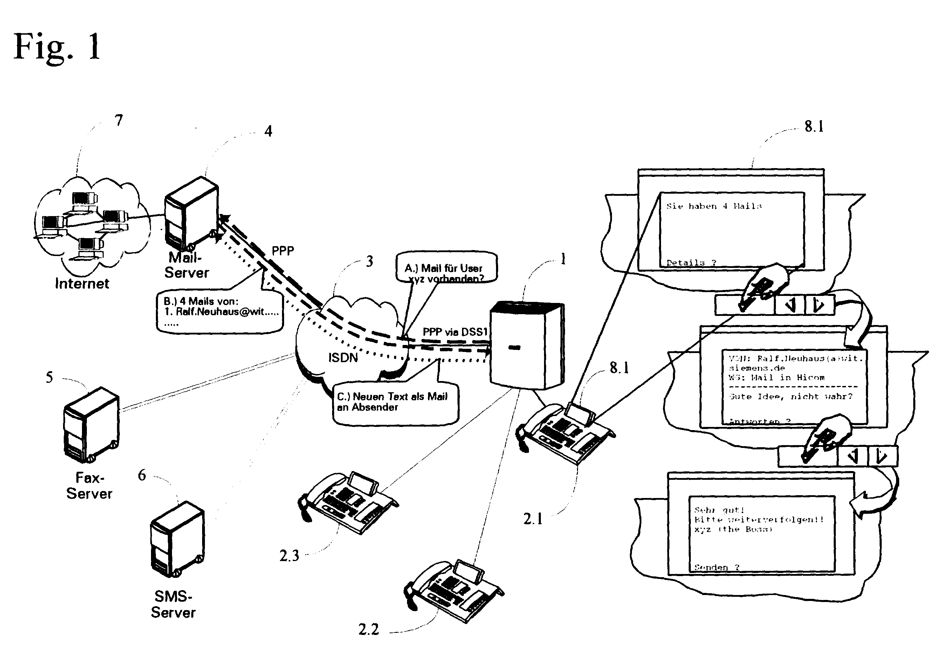

Die Figur 1 zeigt eine erfindungsgemäße Telekommunikationsanlage 1 mit der angeschlossenen Peripherie in Form von drei Telekommunikationsendgeräten 2.1 bis 2.3. Die Telekommunikationsanlage 1 ist über ein öffentliches Telekommunikationsnetz 3, in diesem Fall ein ISDN-Netz, mit drei Dienste-Servern 4,5, und 6 verbunden. Die Dienste-Server bestehen aus einen SMS-Server 6, einem Fax-Server 5 und einem Mail-Server 4. Der Mail-Server 4 ist wiederum mit dem Internet 7 verbunden, über das die zusendenden E-mails an die entsprechenden empfangenden E-mail-Server weitergeleitet wird.

In der Darstellung der Figur 1 wird gezeigt, wie die Versendung einer eingegebenen Zeichenfolge - dargestellt auf dem Display 8.1 des Telekommunikationsendgerätes 2.1 vonstatten geht. In der ersten oben stehenden Vergrößerung des Displays 8.1 ist gezeigt, daß die Telekommunikationsanlage durch eine Verbindung mit dem E-mail-Server die Information über vier vorliegende E-mails für den entsprechenden Teilnehmer (Tln) anzeigt. Eine der E-mails ist in der darunterliegenden Darstellung mit dem zugehörigen Header angezeigt. In der nächsten Darstellung wird eine Nachricht, in Form einer Zeichenfolge, die über eine Tastatur eingegeben wurde, angezeigt und es wird nachgefragt, ob diese nun gesendet werden soll.

Das Senden dieser Nachricht als E-mail findet in der Gestalt statt, daß die Telekommunikationsanlage einen zuvor bestimmten Mail-Server über das allgemeine Telekommunikationsnetz anwählt, mit diesem Verbindung aufnimmt und gemäß dem SMTP die vorliegende E-mail an den Mail-Server 4 übergibt. Der Mail-Server 4 leitet daraufhin innerhalb des Internets die E-mail an den entsprechenden, in der Adresse angegebenen Mail-Server des Empfängers weiter.

Bei einer derartigen Verbindung kann gleichzeitig beim Mail-Server abgefragt werden, ob weitere E-mails für den entsprechenden Teilnehmer beziehungsweise für alle Teilnehmer der Telekommunikationsanlage 1 vorliegen. Im positiven Fall können diese abgeholt werden und für die Teilnehmer zum Lesen innerhalb der Telekommunikationsanlage 1 zur Verfügung gestellt werden.

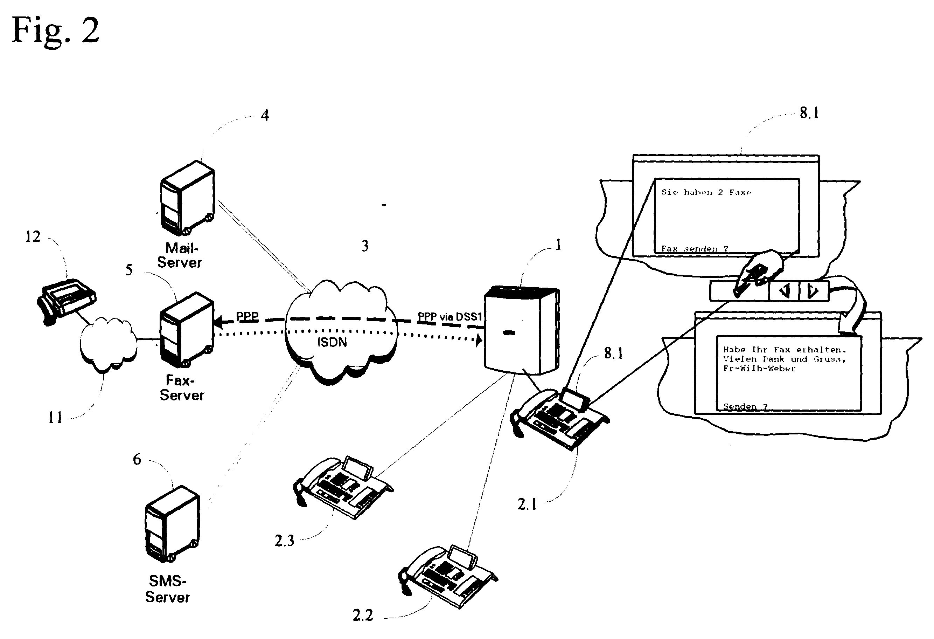

Die Figur 2 zeigt die erfindungsgemäße Telekommunikationsanlage 1 bei der Kommunikation mit dem SMS-Server. Hierbei hat der Teilnehmer der Kommunikationsanlage mit dem Telekommunikationsendgerät 2.1 bestimmt, daß die geschriebene Nachricht, die im Display 8.1 dargestellt ist, als SMS an ein 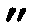 Handy" 9 der zuvor eingegebenen Telefonnummer dieses GSM-Teilnehmers (Funknetz-Teilnehmer) versandt wird. Die Telekommunikationsanlage baut daraufhin eine PPP-Verbindung zu dem SMS-Server auf und übergibt den übertragenen Text und die Zielrufnummer an den SMS-Server 6, der daraufhin die Nachricht über das GSM-Netz an das entsprechende 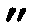 Handy" 9 weitergibt.

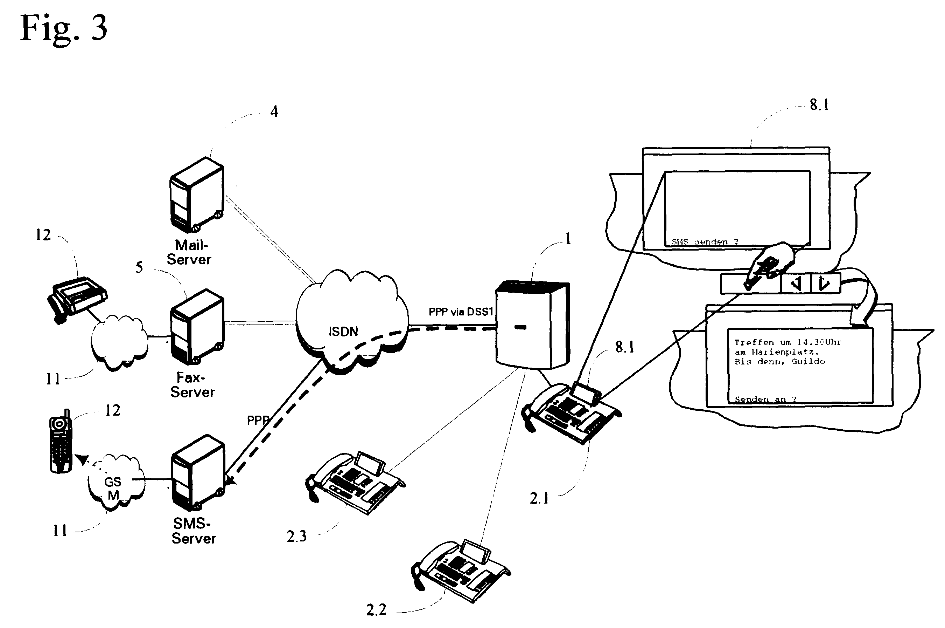

Dir Figur 3 zeigt die Telekommunikationsanlage 1, die über ein öffentliches Telekommunikationsnetz einen eingegebenen Text auf einem Telekommunikationsendgerät 2.1 an einen Fax-Server 5 weiterleitet. Die Nachricht wird über eine PPP-Verbindung über ein öffentliches Telekommunikationsnetz an den Fax-Server übertragen, wobei auch der Fax-Server die Faxnummer des Adressaten erhält. Der Fax-Server übersetzt die Zeichenfolge, die in der Regel aus ASCII-Zeichen besteht, in ein standardmäßig genutztes Faxformat und leitet die Nachricht im Faxformat über ein öffentliches Telekommunikationsnetz 11, das mit dem Faxgerät 12 des Adressaten verbunden ist, an das Faxgerät 12.

In umgekehrter Weise kann auch über den Faxserver eine Faxnachricht von einem externen Faxgerät an die Telekommunikationsanlage selbst weitergeleitet werden und dort dem einzelnen Teilnehmer nach einer entsprechenden Umsetzung auf das telekommunikationsanlagenspezifische Format am Telekommunikationsendgerät 2.1 zur Verfügung gestellt werden.

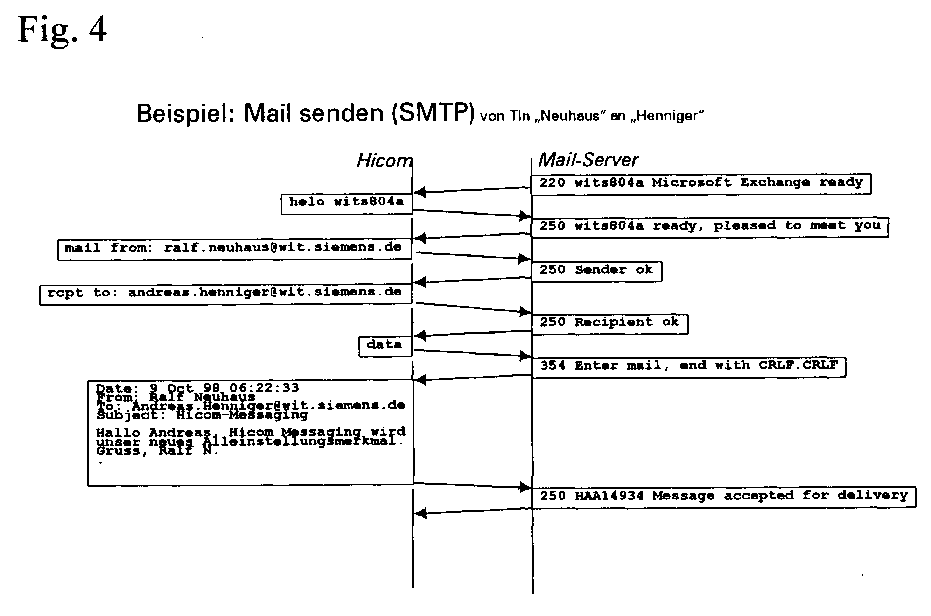

In der Figur 4 ist schließlich ein Beispiel für einen SMPT-Meldungs-Ablauf zwischen einer Telekommunikationsanlage und einem Mail-Server beim Senden einer Mail eines Teilnehmers Neuhaus an den SMPT-Empfänger 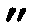 Andreas.Henninger@wit.siemens.de" dargestellt.

## Patentansprüche

1. Telekommunikationsanlage (1) mit:
- mindestens einem Anschluß an mindestens ein externes Telekommunikationsnetz und mehreren mittelbar oder unmittelbar untereinander verbundenen, internen Telekommunikationsendgeräten (2.1 - 2.3), die zumindest teilweise über eine einzeilige oder mehrzeilige Anzeigevorrichtung zumindest für geschriebenen Text und einer Eingabevorrichtung zumindest für geschriebenen Text verfügen,
- einer Einwahlvorrichtung in das mindestens eine externe Telekommunikationsnetz und
- mindestens einer Recheneinheit mit mindestens einem Datenspeicher, dadurch gekennzeichnet, daß
- an mindestens einem Telekommunikationsendgerät (2.1 - 2.3) Mittel zur Auswahl einer Sendeart einer zuvor eingegebenen oder vorhandenen Zeichenfolge vorgesehen sind.

2. Telekommunikationsanlage (1) gemäß dem vorstehenden Anspruch 1, dadurch gekennzeichnet, daß Mittel vorgesehen sind, die vor dem Versenden der Zeichenfolge eine Konvertierung der telekommunikationsanlagenspezifischen Zeichenfolge in eine sendeartspezifische Zeichenfolge eines entsprechenden Dienstes durchführen.

3. Telekommunikationsanlage (1) gemäß einem der vorstehenden Ansprüche 1-2, dadurch gekennzeichnet, daß als zumindest eine Sendeart eine E-mail-Versendung an einen Mail-Server (4) vorgesehen ist.

4. Telekommunikationsanlage (1) gemäß einem der vorstehenden Ansprüche 1-3, dadurch gekennzeichnet, daß als zumindest eine Sendeart eine Fax-Versendung an einen Fax-Server (5) vorgesehen ist.

5. Telekommunikationsanlage (1) gemäß einen der vorstehenden Ansprüche 1-4, dadurch gekennzeichnet, daß als zumindest eine Sendeart eine SMS-Versendung (SMS = Short Message Service) an einen SMS-Server (6) vorgesehen ist.

6. Telekommunikationsanlage (1) gemäß einem der vorstehenden Ansprüche 1-5, dadurch gekennzeichnet, daß die Versendung der Zeichenfolge zum entsprechenden Dienste-Server einem SMTP (Simple Mail Tranfer Protocol, RFC 821) entspricht.

7. Telekommunikationsanlage (1) gemäß einem der vorstehenden Ansprüche 1-6, dadurch gekennzeichnet, daß als Mittel zur Auswahl einer Sendeart eine Menüauswahl am Display (8.1 - 8.3) des Telekommunikationsendgerätes (2.1 - 2.3) eingeblendet wird.

8. Telekommunikationsanlage (1) gemäß einem der vorstehenden Ansprüche 1-7, dadurch gekennzeichnet, daß die Telekommunikationsanlage (1) einen Datenspeicher mit einer Liste von Dienste-Servern und zugeordneten Rufnummern gegebenenfalls Kennungen und/oder Paßwörtern aufweist, die zur Versendung des gewählten Dienstes genutzt werden.

9. Telekommunikationsanlage (1) gemäß einem der vorstehenden Ansprüche 1-8, dadurch gekennzeichnet, daß an mindestens einem Telekommunikationsendgerät (2.1 - 2.3) oder in der Zentraleinheit der Telekommunikationsanlage Mittel zum Empfang von E-mail und/oder Fax und/oder SMS-Nachrichten vorgesehen sind.

10. Telekommunikationsanlage (1) gemäß dem vorstehenden Anspruch 9, dadurch gekennzeichnet, daß Mittel zur Konvertierung von Zeichenfolgen empfangener E-mail und/oder Fax und/oder SMS-Nachrichten auf die telekommunikationsanlagenspezifische Zeichenfolge vorgesehen sind.

11. Verfahren zum Betrieb einer Telekommunikationsanlage (1) mit Verbindungs- und Wählfunktionen, dadurch gekennzeichnet, daß an mindestens einem Telekommunikationsendgerät (2.1 - 2.3) die Sendeart einer zuvor eingegebenen oder vorhandenen Zeichenfolge ausgewählt werden kann.

12. Verfahren gemäß dem vorstehenden Anspruch 11, dadurch gekennzeichnet, daß vor dem Versenden der Zeichenfolge eine Konvertierung der telekommunikationsanlagenspezifischen Zeichenfolge in eine sendeartspezifische Zeichenfolge eines entsprechenden Dienstes der Sendeart durchgeführt wird.

13. Verfahren gemäß einem der vorstehenden Ansprüche 11-12, dadurch gekennzeichnet, daß als zumindest eine Sendeart eine E-mail-Versendung an einen Mail-Server (4) verwendet wird.

14. Verfahren gemäß einem der vorstehenden Ansprüche 11-13, dadurch gekennzeichnet, daß als zumindest eine Sendeart eine Fax-Versendung an einen Fax-Server (5) verwendet wird.

15. Verfahren gemäß einem der vorstehenden Ansprüche 11-14, dadurch gekennzeichnet, daß als zumindest eine Sendeart eine SMS-Versendung (SMS = Short Message Service) an einen SMS-Server (6) verwendet wird.

16. Verfahren gemäß einem der vorstehenden Ansprüche 11-15, dadurch gekennzeichnet, daß zur Versendung der Zeichenfolge zum entsprechenden Dienste-Server ein SMTP (Simple Mail Tranfer Protocol, RFC 821) verwendet wird.

17. Verfahren gemäß einem der vorstehenden Ansprüche 11-16, dadurch gekennzeichnet, daß zur Auswahl einer Sendeart eine Menüauswahl am Telekommunikationsendgerät (2.1 - 2.3) eingeblendet wird.

18. Verfahren gemäß einem der vorstehenden Ansprüche 11-17, dadurch gekennzeichnet, daß vor der Anwahl der Dienste-Server eine Liste im Datenspeicher der Telekommunikationsanlage mit gespeicherten, den Dienste-Servern zugeordneten Rufnummern gegebenenfalls Kennungen und/oder Paßwörtern durchsucht und zur Anwahl des Dienste-Servers zur ausgewählten Sendeart verwendet wird.

19. Verfahren gemäß einem der vorstehenden Ansprüche 11-17, dadurch gekennzeichnet, daß vor der Anwahl der Dienste-Server dem Teilnehmer eine Liste im Datenspeicher der Telekommunikationsanlage mit gespeicherten, den Dienste-Servern zugeordneten Rufnummern gegebenenfalls Kennungen und/oder Paßwörtern zur Auswahl des gewünschten Dienste-Servers angezeigt wird.

20. Verfahren gemäß einem der vorstehenden Verfahrensansprüche 11-19, dadurch gekennzeichnet, daß zum Empfang von E-mail und/oder Fax und/oder SMS-Nachrichten eine Rekonvertierung der empfangenen Zeichenfolgen auf die telekommunikationsanlagenspezifische Zeichenfolge vorgenommen wird.
